# EUROPEAN PATENT APPLICATION

(11) **EP 1 648 043 A1**
(43) Date of publication of application: **19.04.2006**
(21) Application number: 04724714.3
(22) Date of filing: 31.03.2004
(51) Int. Cl.: H01M 2/02

(54) **BATTERY AND METHOD OF PRODUCING THE SAME**

(30) Priority: 03.07.2003 JP 2003191315
(71) Applicant: MATSUSHITA ELECTRIC INDUSTRIAL CO., LTD., Kadoma-shi, Osaka 571-8501 (JP)
(72) Inventor: INOUE, Koki, Osaka 543-0043 (JP); TSURUTANI, Shinji, Kyoto 619-0238 (JP)
(74) Representative: Haley, Stephen
(86) International application number: PCT/JP2004/004577
(87) International publication number: WO 2005/004259

(57) **Abstract**

A battery manufacturing method including a step of accommodating elements for electromotive force (3) in a battery case (2) having an oval cross section, a step of placing a sealing member (5) on an open end of the battery case (2) with a gasket interposed therebetween, and a step of sealing the battery by inwardly crimping the open end of the battery case (2). In the sealing step, long side edges (2a) of the battery case (2) are crimped by a forming surface (17) having a rounded cross section, and arc-shaped edges (2b) connecting both long side edges are crimped by a flat forming surface (18). A battery having excellent safety properties with no risk of liquid leakage due to its uniform, airtight, and highly reliable seal around the entire circumference of the open end of the battery case (2) is thus provided.

## Description

The present invention relates to a battery suitably used as a battery power source of portable electronic devices or the like, and to its manufacturing method.

Performance of modern portable electronic devices such as mobile phones, mobile information terminals and the like depends largely not only on the semiconductor elements and electronic circuits mounted therein but also on the performance of sealed rechargeable batteries, and accordingly a capacity increase of sealed rechargeable batteries mounted in the devices, as well as a decrease in their weight and size, are sought. Nickel metal hydride rechargeable batteries having about twice higher energy density than nickel cadmium rechargeable batteries have been developed as a sealed rechargeable battery that can meet these demands, followed by lithium ion batteries having an even higher energy density. Both are now used for different applications.

These sealed rechargeable batteries are generally formed of elements for electromotive force consisting of wound or laminated positive and negative electrodes with separators interposed therebetween and liquid electrolyte, these elements being encased in a cylindrical, prismatic, or flat battery case and sealed by crimping or laser welding. Prismatic or flat batteries are particularly suited for the reduction in thickness of devices for which they are used and are increasingly used for portable electronic devices such as mobile phones. The laser welding method for sealing a flat battery in which a sealing plate is welded to the open end of the case has the drawbacks that the cost is high and productivity is low, and that, in the case with lithium rechargeable batteries, there is the danger of ignition during laser welding because of the use of organic liquid electrolyte.

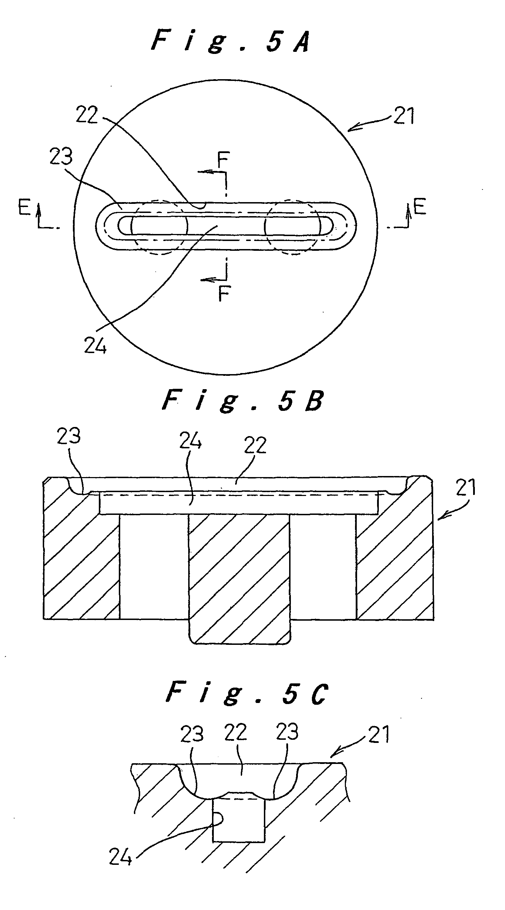

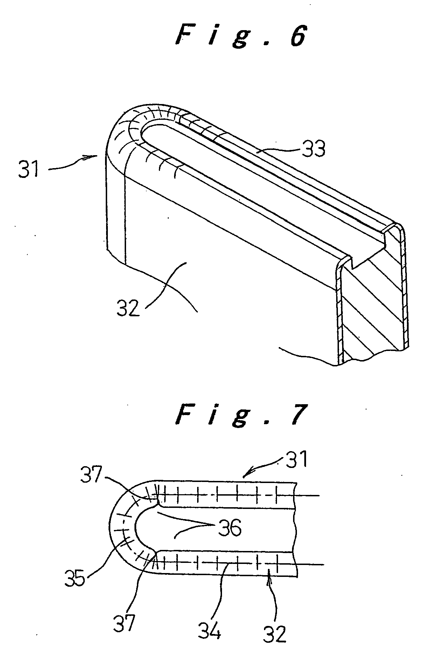

As an alternative method, a low-cost and high-productivity battery case that has a long oval cross section is used to encase the elements for electromotive force, and with a gasket and a sealing member placed on the open end of the battery case, the open end of the battery case is crimped to provide a seal similarly to conventional cylindrical batteries. More specifically, as shown in Fig. 5A to Fig. 5C, a crimping tool 21 used in the crimping process of the battery case has a recess 22 with an opening in the same shape as the cross section of the battery case and a forming surface 23 having a rounded cross section of the same radius of curvature around the entire circumference of the inner bottom of the recess 22. The recess 22 of the crimping tool 21 is fitted onto the open end of the battery case 32 and a predetermined pressure is applied, whereby the entire circumference of the open end of the battery case 32 is curled to form a crimped portion 33 as shown in Fig. 6, which seals the battery 31. Reference numeral 24 in Fig. 5A to Fig. 5C represents an escape recess formed in the center of the inner bottom of the recess 22.

Referring now to Fig. 7 to describe the problem more specifically, in the battery 31 wherein the open end of the battery case 32 is crimped using the crimping tool 21 shown in Fig. 5A to Fig. 5C, the cross-sectional shape is different between the linear crimped portions 34 along the long side edges of the battery case 32 and the arc-shaped crimped portions 35 along the arc-shaped edges connecting both long sides of the battery case, because the arc-shaped edges are crimped more easily than the long side edges. In some cases, there may be formed abnormal bent portions 37 at the boundaries 36 therebetween or in the vicinity caused by deformation or buckling resulting from the difference in their cross-sectional shapes. This may result in difficulty in securing the sealing property or sealing pressure resistance of the battery and lead to a reduction in the strength of the sealed part of the battery. Leakage of liquid or gas from the sealed part will lower the pressure inside and causes a safety mechanism such as a current shutoff mechanism inside the sealing plate to fail to operate when it should operate in response to a pressure buildup inside the battery because of overcharge or the like. As a result, the battery safety may be compromised. Reduced sealing pressure resistance also affects the liquid leakage resistance during storage at high temperatures.

A possible solution to prevent buckling at the boundaries between the linear crimped portions 34 and arc-shaped crimped portions 35 would be to form a flat forming surface around the circumference of the inner bottom of the recess 22 of the crimping tool 21 instead of the rounded forming surface 23. However, the crimping reliability in the linear crimped portions 34 would then be lowered, which leads to the danger of liquid leakage.

In an alternative proposed method, crimping is performed using a rounded forming surface, after which the long side edges of the upper end of the battery case are punched (see, for example, Japanese Patent Laid-Open Publication No. 2000-331654). In another proposed method, the linear long side edges are crimped using a forming surface with a rounded cross section having a radius of more than 90° and the arc-shaped edges connecting both long side edges are crimped using a forming surface having a smaller radius than that (see, for example, Japanese Patent Laid-Open Publication No. 2002-324523).

In either case, however, a rounded forming surface is used for both of the linear crimped portions 34 and the arc-shaped crimped portions 35 and the sealing properties of these linear and arc-shaped crimped portions 34 and 35 are not sufficiently secured because they have different crimp-seal characteristics. This problem is becoming significant under the situation where the thickness of the battery case, and accordingly of the gasket, is getting smaller with the increase in battery capacity and decrease in battery thickness.

In view of the problems in the conventional technique, it is an object of the invention to provide a battery that is uniformly and tightly crimped around the entire circumference of an open end of the flat battery case having an oval cross section, a battery having excellent safety properties with no risk of liquid leakage due to its highly reliable seal, and a manufacturing method of this battery.

To solve the above problems, the present invention provides a battery manufacturing method including a step of accommodating elements for electromotive force in a battery case having an oval cross section, a step of placing a sealing member on an open end of the battery case with a gasket interposed therebetween, and a step of sealing the battery by inwardly crimping the open end of the battery case. In the sealing step, long side edges of the battery case are crimped by a forming surface having a rounded cross section, and arc-shaped edges connecting both long side edges are crimped by a flat forming surface. The crimp-seal strength is thereby reduced at the arc-shaped edges that are more readily crimped than the long side edges so that both of the arc-shaped and long side edges have generally equal sealing properties. Thus the open end of the flat battery case having an oval cross section including the boundaries between the arc-shaped parts and long side parts is uniformly crimped around the entire circumference with excellent sealing properties. Accordingly, there is no danger that a situation arises where a pressure drop due to leakage of liquid or gas from the sealed part causes a safety mechanism such as a current shutoff mechanism inside the sealing plate to fail to operate when it should operate in response to a pressure increasing inside the battery resulting from overcharge or the like, because of which the battery safety is compromised. The battery thus manufactured is highly reliable due to its excellent leakage resistance during storage at high temperatures.

A battery according to the present invention has a battery case obtained by the battery manufacturing method described above. The long side crimp-sealed edges of the battery case have flat top surfaces, and the arc-shaped edges connecting both long side edges have a rounded cross section. Preferably, the arc-shaped edges connecting both long side edges are higher than the long side crimp-sealed edges of the battery case.

This way, the long side edges are crimped to have flat top surfaces and inwardly rounded or flattened tips while the arc-shaped edges connecting both long side edges are crimped to have a rounded cross section without causing buckling of the insulating gasket. The sealing properties at both portions are thus made equal, and a uniform crimped portion is formed around the entire circumference of the open end of the battery case, including the boundaries between the arc-shaped parts and long side parts. Accordingly, there is no danger that a situation arises where a pressure drop due to leakage of liquid or gas from the sealed part causes a safety mechanism such as a current shutoff mechanism inside the sealing plate to fail to operate when it should operate in response to a pressure increasing inside the battery resulting from overcharge or the like, because of which the battery safety is compromised. The resultant battery is highly reliable due to its excellent leakage resistance during storage at high temperatures. By making the arc-shaped edges connecting both long side edges 0.1 to 0.5mm higher than the long side crimp-sealed edges of the battery case, the compression rate of the insulating gasket is made equal at the arc-shaped parts and the long side parts, ensuring that the sealing properties are uniform.
Fig. 1A and Fig. 1B illustrate one embodiment of a battery according to the present invention, Fig. 1A being an overall perspective view and Fig. 1B being an enlarged perspective view of a sealed state of the battery;
Fig. 2 is an enlarged cross section taken along the line II-II of Fig. 1A;
Fig. 3 is an enlarged cross section taken along the line III-III of Fig. 1A;
Fig. 4A is a plan view, Fig. 4B is an enlarged cross section taken along the line IVB-IVB of Fig. 4A, and Fig. 4C is an enlarged cross section taken along the line IVC-IVC of Fig. 4A, illustrating a crimping tool used in a manufacturing process of the same embodiment of the battery;
Fig. 5A is a plan view, Fig. 5B is an enlarged cross section taken along the line VB-VB of Fig. 5A, and Fig. 5C is an enlarged cross section taken along the line VC-VC of Fig. 5A, illustrating a crimping tool used in a manufacturing process of a conventional battery;
Fig. 6 is a perspective view illustrating a sealed state of a conventional battery; and
Fig. 7 is a partial plan view illustrating a problem in the sealed state of the conventional battery.

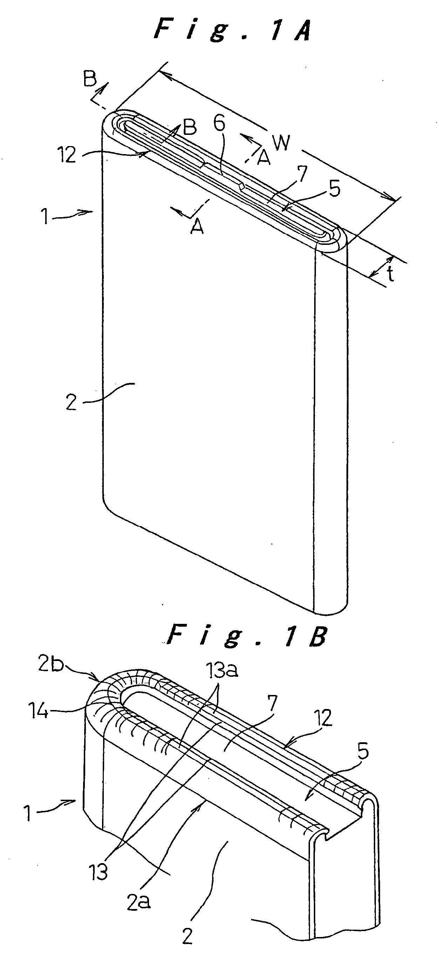

One embodiment of the battery of the present invention, in the form of a lithium ion rechargeable battery, and its manufacturing method will be described below with reference to Fig. 1A to Fig. 4C. The present invention should not be limited to a specific type of battery and may be applied to other batteries such as nickel cadmium batteries and nickel metal hydride batteries as long as the battery has a flat oval cross section.

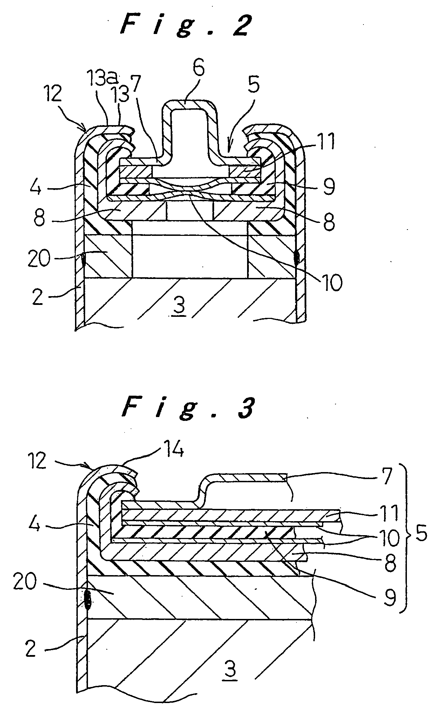

Referring to Fig. 1A and Fig. 1B, the battery 1 is structured as a lithium ion rechargeable battery and has a flat shape with a long oval cross section, its width W being four to eight times larger than its thickness t. As shown in Fig. 2 and Fig. 3, the battery 1 is formed of elements for electromotive force 3 consisting of positive and negative electrodes arranged opposite each other with separators interposed therebetween and liquid electrolyte, these elements being encased in a bottomed flat battery case 2 with an open top end. The material of the battery case 2 may be inexpensive nickel-plated copper or lightweight aluminum alloy depending on the purpose of use. The open end of the battery case 2 is sealed by a crimped portion 12, which is formed by plastically deforming the entire circumference of the open end of the battery case 2 inwardly after an insulating gasket 4 and a sealing plate 5 as a sealing member are fitted onto the open end. Reference numeral 20 represents a metal reinforcing plate attached to a predetermined position below the open top end of the battery case 2 by laser welding or the like for supporting the sealing plate 5.

The sealing plate 5 includes a cap 7 with a protruded part 6, the cap serving as the connection electrode of one polarity. The battery case 2 serves as the connection electrode of the other polarity. The sealing plate 5 is formed of a filter 8, and a safety vent mechanism 10, a PTC element 11, and the cap 7 accommodated inside the filter 8, with an inner gasket 9 interposed therebetween. The filter 8 is connected to the elements for electromotive force 3, and to the cap 7 via the safety vent mechanism 10 and the PTC element 11.

The crimped portion 12 at the open end of the battery case 2 is formed as flat crimped portions 13 having flat top surfaces 13a along the long side edges 2a of the battery case 2, and arc-shaped crimped portions 14 having a rounded cross section along the arc-shaped edges 2b connecting both long side edges of the battery case 2.

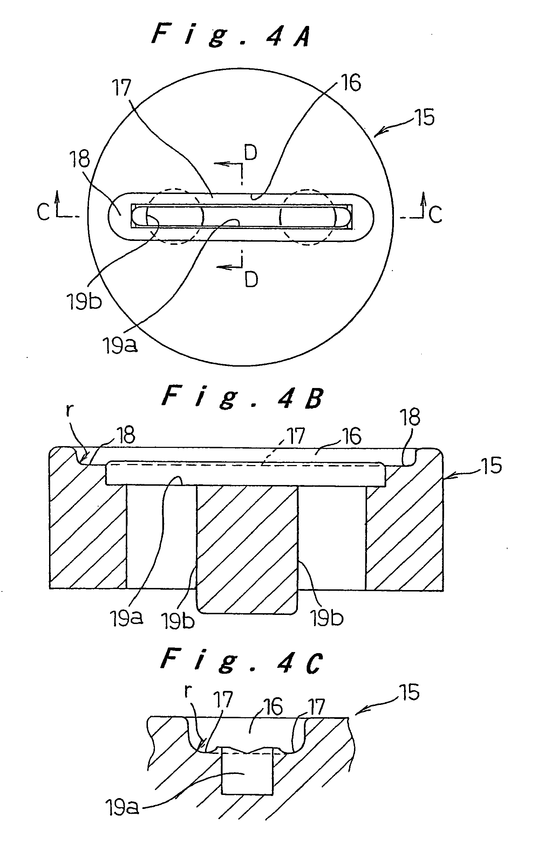

As shown in Fig. 4A to Fig. 4C, a crimping tool 15 used for forming the crimped portion 12 has a recess 16 with an opening in the same shape as the cross section of the battery case 2 and a rounded forming surface 17 and a flat forming surface 18 around the circumference of the inner bottom of the recess 16. The recess 16 of the crimping tool 15 is fitted onto the open end of the battery case 2 and a predetermined pressure is applied. The rounded forming surface 17 is a forming surface having a rounded cross section provided at linear parts corresponding to the long side edges 2a of the battery case 2. The flat forming surface 18 is a flat forming surface provided at arc-shaped parts corresponding to the arc-shaped edges 2b of the battery case 2. The radius of curvature r of the rounded forming surface 17 and the radius of curvature rat the corners of the flat forming surface 18 are the same. Reference numeral 19a represents an escape recess formed in the center of the inner bottom of the recess 16, and 19b represents a push pin for removing the battery 1 after the crimping process.

The linear long side edges of the open end of the battery case 2 are plastically deformed by the rounded forming surface 17 to compress the insulating gasket 4 and to crimp-seal the battery case edge in a reliable manner. The arc-shaped parts connecting both long side edges are plastically deformed by the flat forming surface 18 inwardly from the outer circumference of the arc to crimp-seal. This way, the long side edges are crimped to have flat top surfaces and inwardly rounded or flattened tips while the arc-shaped edges connecting both long side edges are crimped to have a rounded cross section without causing buckling of the insulating gasket. The sealing properties at both portions are thus made equal, and a uniform crimped portion is formed around the entire circumference of the open end of the battery case, including the boundaries between the arc-shaped parts and long side parts. Accordingly, there is no danger that a situation arises where a pressure drop due to leakage of liquid or gas from the sealed part causes a safety mechanism such as a current shutoff mechanism inside the sealing plate to fail to operate when it should operate in response to a pressure increasing inside the battery resulting from overcharge or the like, because of which the battery safety is compromised. The battery is highly reliable due to its excellent leakage resistance during storage at high temperatures.

Instead of the reinforcing plate, a groove may be formed in the outer surface at a predetermined position below the open top end of the battery case, so that the inwardly protruding part is used as a support portion for placing the sealing plate. The same effects will be achieved.

An overall description of the manufacturing process of the battery 1 with the above configuration is as follows: The elements for electromotive force 3 are accommodated in the battery case 2 having an oval cross section; the reinforcing plate 20 is inserted from the open end of the battery case 2, and welded at a predetermined position; the insulating gasket 4 and the sealing plate 5 are placed in the open end of the battery case 2, and the filter 8 is connected to the electrode of one polarity extending from the elements for electromotive force 3; and lastly, the open end of the battery case 2 is crimp-sealed using the crimping tool 15 as described above, to complete the battery 1.

According to this embodiment described above, a uniform and airtight crimped portion 12 is formed around the entire circumference of the open end of a flat battery 1 having an oval cross section, and therefore a highly reliable seal is achieved even though the thickness of the battery case or of the gasket is reduced with the increase in battery capacity and decrease in battery thickness. Thus leakage-proof, thin batteries 1 are manufactured with good productivity.

As described above, the present invention enables formation of a uniform crimped portion with excellent sealing properties around the entire circumference of the open end of a flat battery case having an oval cross section, and provides a battery having excellent safety properties with no risk of liquid leakage due to its highly reliable sealing.

## Claims

1. A battery manufacturing method comprising the steps of: accommodating elements for electromotive force (3) in a battery case (2) having an oval cross section; placing a sealing member (5) on an open end of the battery case (2) with a gasket (4) interposed therebetween; and sealing the battery by inwardly crimping the open end of the battery case (2), wherein
in the sealing step, long side edges (2a) of the battery case (2) are crimped by a forming surface (17) having a rounded cross section, and arc-shaped edges (2b) connecting both long side edges are crimped by a flat forming surface (18).

2. A battery comprising: elements for electromotive force (3) encased in a battery case (2) having an oval cross section; and a sealing member (5) placed on an open end of the battery case (2) with a gasket (4) interposed therebetween, the open end being inwardly crimped to seal the battery, wherein long side edges (2a) of the battery case (2) are crimped by a forming surface (17) having a rounded cross section of a crimping tool (15) to have flat top surfaces (13a), and arc-shaped edges (2b) connecting both long side edges of the battery case (2) are crimped by a flat forming surface (18) of the crimping tool (15).

3. The battery according to claim 2, wherein the arc-shaped edges (2b) connecting both long side edges is higher than the long side crimp-sealed edges (2a) of the battery case (2).
